# EUROPÄISCHE PATENTSCHRIFT

(11) **EP 0 246 422 B1**
(45) Veröffentlichungstag und Bekanntmachung des Hinweises auf die Patenterteilung: **31.08.1994**
(21) Anmeldenummer: 87104180.2
(22) Anmeldetag: 21.03.1987
(51) Int. Cl.: G05B 19/405

(54) **Vorrichtung zur Gewinnung von Werkstückkonturen**
Apparatus for determining the contours of a work piece
Dispositif pour obtenir les contours d'une pièce à usiner

(30) Priorität: 17.05.1986 DE 3616740
(43) Veröffentlichungstag der Anmeldung: 25.11.1987
(73) Patentinhaber: Dr. Johannes Heidenhain GmbH, D-83292 Traunreut (DE)
(72) Erfinder: Opitz, Elisabeth, Dipl.-Math., D-7523 Graben-Neudorf (DE); Krägelin, Birger, Dipl.-Inform., D-7500 Karlsruhe 1 (DE); Stöhr, Wilfried, Dipl.-Math., D-7531 Neulingen (DE)

(56) Entgegenhaltungen:
- EP-A- 0 103 789
- EP-A- 0 129 091
- EP-A- 0 144 585
- EP-A- 0 153 556
- FR-A- 2 578 990

## Beschreibung

Die Erfindung bezieht sich auf eine Vorrichtung zur Gewinnung von Werkstückkonturen gemäß dem Oberbegriff des Anspruches 1.

Bevorzugt findet eine derartige Vorrichtung in numerisch gesteuerten Werkzeugmaschinen Anwendung, bei denen die gewonnene Werkstückkontur zur Programmüberprüfung an einem Bildschirm dargestellt und gegebenenfalls nach Korrekturen als Werkstück erzeugt wird. Als Beispiel für eine derartige Vorrichtung sei auf die EP-A2 0 144 585 verwiesen, in der ein Verfahren zur Darstellung von Werkstücken beschrieben ist.

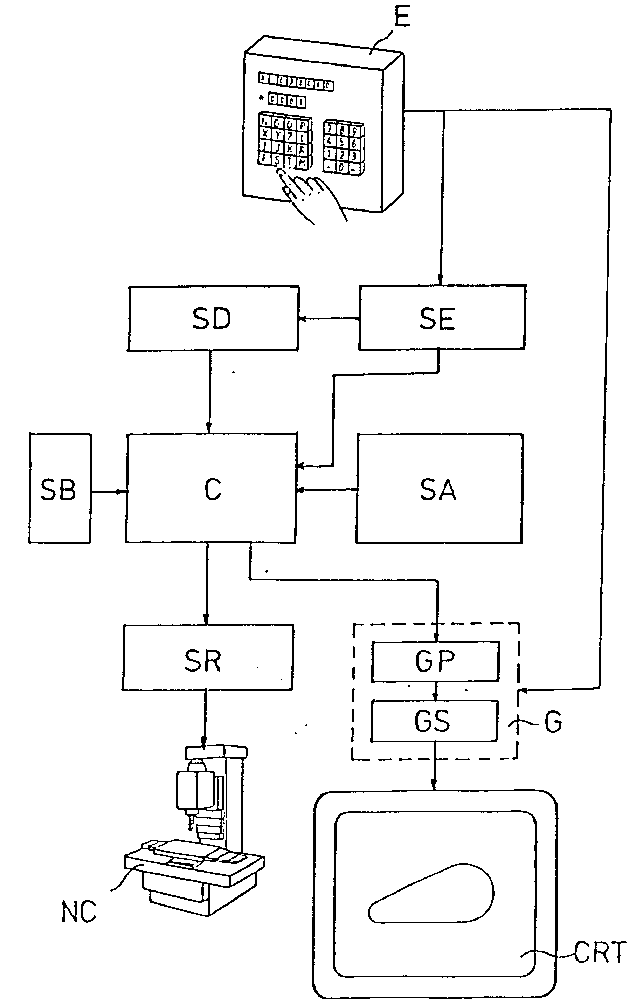

Dazu ist ein Werkstück-Programm erforderlich, für das die Eingabedaten für die Werkstückkontur möglichst direkt aus der Werkstückbezeichnung abgelesen werden können sollten. Eine typische Werkstückzeichnung besteht aus einer Folge von geraden Linien und kreisförmigen Bögen, die aneinandergereiht oder aneinandergekettet sind, um die Kontur des Werkstücks zu bilden. Wenn der Anfangspunkt und der Endpunkt jedes geradlinigen Kurvenstücks auf der Zeichnung zusammen mit den Anfangs- und Endpunkten der kreisförmigen Bögen sowie deren Mittelpunkte vorgegeben wären, bereitete das Verfahren zur Gewinnung der gewünschten Werkstückkontur auf einer numerisch gesteuerten Werkzeugmaschine keine Schwierigkeiten und wäre trivial. In Wirklichkeit ist jedoch die Geometrie des Werkstücks im allgemeinen nicht hinreichend bestimmt. Die Schnittpunkte der kreisförmigen Bögen miteinander und mit geradlinigen Kurvenstücken sind im allgemeinen nicht bekannt.

Der Erfindung liegt die Erkenntnis zugrunde, daß die überwiegende Mehrzahl der Bauteile oder Werkstücke, die auf numerisch gesteuerten Werkzeugmaschinen hergestellt werden, aus aneinandergereihten oder miteinander verketteten ausgewählten geometrischen Formen konstruiert werden können. Die Anzahl der verschiedenen Konturstücke, die man benötigt, um den überwiegenden Anteil der Werkstücke definieren zu können, ist relativ gering. Diese geometrischen Formen könnten durch die geometrischen Abmessungen der Konturstücke definiert werden.

Für den Fachmann ist es augenscheinlich, daß die Anzahl der Konturstücke und ihre spezifischen Eigenschaften verändert werden können.

Betrachtet man also die Werkstückzeichnung, so wird ersichtlich, daß die resultierende Werkstückkontur durch eine Folge oder Sequenz von Konturstücken beschrieben werden kann, deren vollständige Geometriedaten aus der Werkstückzeichnung allerdings nur in den seltensten Fällen direkt entnommen werden können.

In der EP-A1-0 103 789 ist eine Methode beschrieben, die einen Ansatz offenbart, wie derartig unvollständige Geometriedaten anhand von Tabellen und durch festgelegte Berechnungen mit Hilfe von NC-Sätzen vervollständigt werden können, wobei die anzuwendenden NC-Sätze von vornherein festgelegt sind.

Ein weiteres Beispiel für eine derartige Lösung wird in der Druckschrift GAP-1, "Automatische Geometrie in der Ebene", Florenz, Oktober 1980, herausgegeben durch E.C.S. Electronic Control Systems, Firenze beschrieben. Diese Druckschrift betrifft die Vervollständigung von Datensätzen bei numerischen Steuerungen.

Der Erfindung liegt die Aufgabe zugrunde, eine Vorrichtung zu schaffen, mit deren Hilfe eine vollständige Werkstückkontur aus Konturstücken gewonnen werden kann, deren Geometriedaten nicht vollständig sein müssen, wobei die Ermittlungsschritte nicht von vornherein festgelegt sind.

Diese Aufgabe wird von einer Vorrichtung mit den Merkmalen des Anspruches 1 gelöst.

Die besonderen Vorteile der erfindungsgemäßen Vorrichtung liegen in der verhältnismäßig einfachen Handhabung, so daß die Bedienungsperson anhand der Werkstückzeichnung mit deren an sich für eine NC-Programmierung nicht ausreichenden Daten im Dialog mit der Vorrichtung die Datensätze für die Gewinnung einer vollständigen Werkstückkontur hinreichend bestimmen kann, ohne daß die Bedienungsperson komplizierte Überlegungen anstellen muß.

Mit Hilfe eines Ausführungsbeispieles soll die Erfindung anhand der Zeichnung noch näher erläutert werden.

Es zeigt die
- Figur: ein Blockschaltbild der Vorrichtung

Mit Hilfe einer Eingabeeinheit E, die eine Tastatur aufweisen kann, werden Eingabedaten in einen Eingabespeicher SE eingegeben. Aus den Eingabedaten werden Geometriedaten für Konturteilstücke gewonnen und im Datenspeicher SD abgelegt. Der Eingabespeicher SE ist ebenso wie der Datenspeicher SD an einen Rechner C angeschlossen. Ein weiterer Speicher SA für den Konturalgorithmus ist ebenfalls am Rechner C angeschlossen. Der Rechner steuert einen Resultatspeicher SR und eine Grafikeinheit G. Die Grafikeinheit G besteht aus einem Grafikspeicher GS und einem Grafikprozessor GP, der eine Anzeigebaueinheit CRT ansteuert. Der Resultatspeicher SR enthält das Ergebnis der miteinander kombinierten Geometriedaten - was später noch erläutert wird - zur Verwendung bei NC-Maschinen.

Die Funktion der Vorrichtung wird durch die sukzessive Kombination von Geometriedaten gewährleistet, die vom Rechner C nach Maßgabe des Algorithmus, der im Speicher SA abgelegt ist, vorgenommen wird.

Die im Datenspeicher SD abgelegten Geometriedaten bestimmen die Geometrie der Konturteilstücke. Diese Konturteilstücke können, wie eingangs erwähnt, auf geometrisch einfache Elemente zurückgeführt werden und sind durch Angaben aus den folgenden Datenmengen bestimmt:

### Daten einer Geraden

- U, V: kartesische Koordinaten des Endpunktes
- IU, IV: inkrementale Definition der kartesischen Koordinaten, bezogen auf den Endpunkt eines anderen Konturteilstückes
- A: Steigungswinkel der Geraden
- IA: inkrementale Definition des Steigungswinkels, bezogen auf den Steigungswinkel im Endpunkt eines anderen Konturteilstückes
- KL: Abstand zwischen Anfangs- und Endpunkt der Geraden
- DP: Abstand zwischen einem beliebigen Punkt und der Geraden
- P1L, P2L: beliebige Punkte auf der Geraden, jedoch nicht Anfangs- oder Endpunkt
- PR: Polarradius des Endpunktes, bezogen auf einen bereits definierten Pol
- PA: Polarwinkel des Endpunktes, bezogen auf einen bereits definierten Pol
- P: Parallel zu einer anderen Geraden
- DG: Abstand von einer parallelen Geraden
- IPR: inkrementaler Polarradius des Endpunktes, bezogen auf einen bereits definierten Pol und den Endpunkt eines anderen Konkurteilstückes
- IPA: inkrementaler Polarwinkel des Endpunktes, bezogen auf einen bereits definierten Pol und den Endpunkt eines anderen Konturteilstückes
- T: Tangential-Bedingung (entspricht IA = 180°)
- GA, GE: Anfang, bzw. Ende einer geschlossenen Kontur

### Daten eines Kreises

- U, V: kartesische Koordinaten des Kreisbogen-Endpunktes
- IU,IV: inkrementale Definition der kartesischen Koordinaten, bezogen auf den Endpunkt eines anderen Konturteilstückes
- A: Steigungswinkel des Kreisbogens im Anfangspunkt = Tangentenwinkel des Kreises im Anfangspunkt
- IA: inkrementale Definition des Steigungswinkels
- KL: Abstand zwischen Anfangs- und Endpunkt des Kreises
- DP: Abstand zwischen einem beliebigen Punkt und dem Kreis
- P1L,P2L,P3L: beliebige Punkte auf dem Kreis, jedoch nicht Anfangs- oder Endpunkt
- MU, MV: kartesische Koordinaten des Kreismittelpunktes
- MA: Polarwinkel des Endpunktes, bezogen auf den Mittelpunkt als Pol
- IMA: Mittelpunktswinkel des Kreisbogens (betragsmäßig)
- PR: Polarradius des Endpunktes, bezogen auf einen definierten Pol
- PA: Polarwinkel des Endpunktes, bezogen auf einen definierten Pol
- MPR: Polarradius des Mittelpunktes, bezogen auf einen definierten Pol
- MPA: Polarwinkel des Mittelpunktes, bezogen auf einen definierten Pol
- DR: Drehsinn des Kreisbogens
- IMU,IMV: inkrementale Definition der kartesischen Koordinaten des Endpunktes, bezogen auf den Endpunkt eines anderen Konturteilstückes
- IPR: inkrementaler Polarradius des Endpunktes, bezogen auf einen bekannten Pol und den Endpunkt eines anderen Konturteilstückes
- IPA: inkrementaler Polarwinkel des Endpunktes, bezogen auf einen bekannten Pol und den Endpunkt eines anderen Konturteilstückes
- IMPR: inkrementaler Polarradius des Mittelpunktes, bezogen auf einen bekannten Pol und den Endpunkt eines anderen Konturteilstückes
- IMPA: inkrementaler Polarwinkel des Mittelpunktes, bezogen auf einen bekannten Pol und den Endpunkt eines anderen Konturteilstückes
- R: Radius des Kreises
- T: Tangential-Bedingung
- GA, GE: Anfang bzw. Ende einer geschlossenen Kontur

Der im Speicher SA abgelegte Konturalgorithmus bestimmt die Regeln, nach denen der Rechner C in den einzelnen NC-Sätzen die Geometriedaten kombiniert, um daraus höherwertige Daten zu gewinnen. Bevorzugt werden dabei die Daten der benachbarten NC-Sätze kombiniert. Zusammen mit den Daten des "Vorgänger"-NC-Satzes oder des "Nachfolger"-NC-Satzes können die Geometriedaten für die Werkstückkontur sukzessive vervollständigt werden. Allerdings ist es auch möglich, die Geometriedaten eines beliebigen NC-Satzes zur Kombination mit heranzuziehen, wenn die Bezugsdaten nicht auf das kartesische Koordinatensystem, sondern im inkrementalen Bezugssystem vorliegen. Dazu muß dann bei der Kombination die Satznummer des NC-Satzes, auf den Bezug genommen wird, angegeben werden.

Es gibt drei Arten, die Geometriedaten von NC-Sätzen zu kombinieren:
1) die Kombination innerhalb eines NC-Satzes;
2) die Kombination zweier (benachbarter) NC-Sätze (Kombination mit "Vorgänger" oder mit "Nachfolger");
3) die Kombination dreier (benachbarter) NC-Sätze (Kombination mit "Vorgänger" und "Nachfolger").

Nach dem im Speicher SA abgelegten Konturalgorithmus erfolgt die entsprechende Kombination, so kann beispielsweise gemäß 1) bei einer Geraden aus Steigungswinkel und Länge der inkrementale Zuwachs der Koordinaten, bezogen auf den Endpunkt des Vorgänger-NC-Satzes, berechnet werden oder umgekehrt, sowie bei einem Kreis aus Tangentenwinkel im Anfangspunkt des Kreises und inkrementalem Mittelpunktswinkel der Tangentenwinkel im Endpunkt berechnet werden.

Gemäß 2) wird aus Endpunkt des Vorgänger-NC-Satzes und Länge einer darauf folgenden Geraden die Kreislinie bestimmt, auf der der Endpunkt der Geraden liegt.

Schließlich kann gemäß 3) eine Gerade bestimmt werden, die als Tangente an zwei Kreisen anliegt, von denen die Mittelpunkte und die Radien bekannt sind, oder zwischen zwei Geraden soll ein Kreis mit einem bestimmten Radius tangential anschließen.

Jede Kombination führt eine Menge von Geometriedaten eines NC-Satzes durch Verknüpfung mit einem Nachbarsatz oder innerhalb des NC-Satzes gemäß der oben angegebenen Beispiele in eine andere Menge von Geometriedaten über mit dem Ziel, am Ende Aussagen über die Endpunkt- bzw. Mittelpunktkoordinaten des jeweiligen Konturteilstückes zu erhalten.

Der Rechner C kombiniert dazu die Geometriedaten des Speichers SD gemäß dem Konturalgorithmus aus dem Speicher SA in folgender Weise:

Beim zuletzt eingelesenen NC-Satz wird begonnen, alle Kombinations-Regeln auf diesen NC-Satz anzuwenden, sofern die entsprechenden Geometriedaten für den NC-Satz vorhanden sind, dann die nächsten Kombinations-Regeln auf ihn und seinen Vorgänger-NC-Satz bzw. auf den NC-Satz, zu dem es inkrementale Bezüge, d.h. eine Satznummer, gibt. Werden dadurch Geometriedaten für den Vorgänger-NC-Satz erzeugt, so werden auch für diesen wieder alle Kombinations-Regeln mit den entsprechenden NC-Sätzen angewendet und so fort. Sind alle ursprünglich noch unbestimmten NC-Sätze bis zum Listenanfang durchlaufen, so wird die Richtung umgekehrt und bis Richtung Listenende alle Kombinations-Regeln ausgeführt, soweit die entsprechenden Geometriedaten für die Regelanwendung vorhanden sind. Dieses Durchlaufen von Listenende bis Listenanfang und zurück mit Kombinationenbildung wird so lange ausgeführt, bis sich keine neuen Geometriedaten mehr berechnen lassen. Dann wird der nächste NC-Satz eingelesen und die Abarbeitung der Regeln beginnt von vorne.

Kombinations-Regeln sind Regeln, die aus gegebenen Geometriedaten eines NC-Satzes neue Geometriedaten für diesen NC-Satz erzeugen. Ebenso gibt es Kombinations-Regeln, die aus Geometriedaten von zwei NC-Sätzen neue Geometriedaten für einen oder beide NC-Sätze erzeugen. Weitere Kombinations-Regeln ermöglichen die Erzeugung von Geometriedaten für einen, zwei oder drei NC-Sätzen aus Geometriedaten von drei NC-Sätzen.

Ein NC-Satz ist vollständig bestimmt, wenn sich keine der folgenden Geometriedaten mehr für diesen NC-Satz berechnen lassen:
bei einer Geraden A,KL,U,V
bei einem Kreis A,R,MA,MU,MV,U,V.

Da es bei der Anwendung des Konturalgorithmus zu Mehrdeutigkeiten kommen kann, ist ein Speicher SB für einen "Backtrack"-Algorithmus an den Rechner C angeschlossen, der sich jede mögliche Lösung merkt und mit der ersten Lösung so lange weiter rechnet, bis evtl. ein Widerspruch mit einem anderen eingegebenen oder berechneten Wert auftritt. In diesem Fall wird die falsche Lösung und alle daraus resultierenden Zwischenergebnisse wieder rückgängig gemacht und mit der nächsten Lösung weitergerechnet. Entsprechendes gilt auch, wenn es mehr als zwei Lösungen gibt.

Mit der beschriebenen Vorrichtung lassen sich in besonders einfacher Weise vollständige Werkstückkonturen ermitteln und es versteht sich, daß diese nicht zwingend an dem Bildschirm einer NC-Maschine angezeigt werden müssen, sie können auch direkt durch Werkstückbearbeitung erzeugt werden, wenn die erfindungsgemäße Vorrichtung direkt eine NC-Maschine speist. Aber auch an Programmierplätzen ist die Vorrichtung mit Vorteil einsetzbar.

## Patentansprüche

1. Vorrichtung zur Gewinnung einer Werkstückkontur, mit einem Rechner (C), an den eine Dateneingabeeinrichtung (E) zur Eingabe von Eingabedaten in einen Eingabespeicher (SE) angeschlossen ist, wobei aus den Eingabedaten Geometriedaten für Konturteilstücke gewonnen werden, die die Kontur nur unvollständig beschreiben und die in einem Datenspeicher (SD), der ebenfalls am Rechner (C) angeschlossen ist, in Form von adressierbaren Datensätzen tabellarisch als Liste für jeweils ein Teilstück der Werkstückkontur gespeichert sind, daß ferner am Rechner (C) ein Speicher (SA) für einen Konturalgorithmus sowie ein Resultatspeicher (SR) und gegebenenfalls eine Grafikeinheit (G) angeschlossen sind, und bei der nach Maßgabe des abgespeicherten Konturalgorithmus Geometriedaten, die jeweils in logischer, geometrischer Beziehung zueinander stehen, vom Rechner (C) miteinander kombiniert werden, dadurch gekennzeichnet, daß der Rechner (C) eine Menge von Geometriedaten eines NC-Satzes durch Verknüpfung gemäß vorgegebener Kombinationsregeln mit anderen NC-Sätzen oder innerhalb des NC-Satzes in eine andere Menge von Geometriedaten überführt, mit dem Ziel am Ende Aussagen über die Endpunktkoordinaten einer Geraden oder Mittelpunktkoordinaten eines Kreisbogens des jeweiligen Konturstückes zu erhalten, und daß für die Durchführung der Kombinationen beim letzten in der Liste abgelegten Datensatz beginnend die Liste vom Listenende bis zum Listenanfang durchlaufen wird, anschließend die Durchlaufrichtung umgekehrt wird und dieses Durchlaufen der Liste in wechselnden Richtungen solange durchgeführt wird, bis sich aus den kombinierten Geometriedaten keine neuen Geometriedaten mehr gewinnen lassen; daß ferner die auf diese Weise vervollständigten Datensätze dem Resultatspeicher (SR) zugeführt und gegebenenfalls mittels einer Grafikeinheit (G) an einer Anzeigeeinheit (CRT) als Wekstückkontur angezeigt werden.

2. Vorrichtung nach Anspruch 1, dadurch gekennzeichnet, daß ein zusätzlicher "Backtrack"-Algorithmus-Speicher (SB) an dem Rechner angeschlossen ist.

3. Vorrichtung nach Anspruch 1, dadurch gekennzeichnet, daß die Grafikeinheit (G) aus einem Grafikspeicher (GS) und einem Grafikprozessor (GP) besteht, der eine Anzeigeeinheit (CRT) steuert.

4. Vorrichtung nach Anspruch 1, dadurch gekennzeichnet, daß der Resultatspeicher (SR) an eine numerische gesteuerte Maschine (NC) angescholssen ist.

5. Vorrichtung nach Anspruch 1 und 3, dadurch gekennzeichnet, daß die Grafikeinheit (G) über die Dateneingabeeinrichtung (E) manuell beeinflußbar ist.

## Claims

1. Apparatus for obtaining a workpiece contour, with a computer (C) to which is connected a data input device (E) for the entry of input data in an input memory (SE), wherein from the input data are obtained geometry data for contour sections which describe the contour only incompletely and which are stored in a data memory (SD), which is also connected to the computer (C), in the form of addressable data records in table form as a list for in each case a section of the workpiece contour, in that further a memory (SA) for a contour algorithm as well as a result memory (SR) and if occasion arises a graphic unit (G) are connected to the computer (C), and in which, in accordance with the stored contour algorithm, geometry data which are in each case in logical, geometrical relationship to each other are combined with each other by the computer (C), characterised in that the computer (C) converts a set of geometry data of one NC block by linkage according to preset rules of combination with other NC blocks or within the NC block, to another set of geometry data, with the aim at the end of obtaining statements on the end point coordinates of a straight line or centre point coordinates of an arc of the respective contour section, and in that for carrying out the combinations, beginning with the last data record filed in the list, the list is traversed from the end to the beginning of the list, then the direction of traversing is reversed and this traversing of the list is carried out in alternate directions until no more new geometry data can be obtained from the combined geometry data; in that further the data records completed in this way are delivered to the result memory (SR) and if occasion arises displayed as a workpiece contour by means of a graphic unit (G) on a display unit (CRT).

2. Apparatus according to claim 1, characterised in that an additional backtrack algorithm memory (SB) is connected to the computer.

3. Apparatus according to claim 1, characterised in that the graphic unit (G) consists of a graphic memory (GS) and a graphic processor (GP) which controls a display unit (CRT).

4. Apparatus according to claim 1, characterised in that the result memory (SR) is connected to a numerically controlled machine (NC).

5. Apparatus according to claims 1 and 3, characterised in that the graphic unit (G) can be controlled manually via the data input device (E).

## Revendications

1. Dispositif pour obtenir les contours d'une pièce, comportant un ordinateur (C) auquel est connecté un système d'entrée de données (E) pour introduire des données d'entrée dans une mémoire d'entrée (SE), des données géométriques pour des portions de contour qui ne décrivent que de manière incomplète le contour étant obtenues à partir des données d'entrée et stockées en tant que liste associée chaque fois à une portion du contour de la pièce, sous la forme de jeux de données adressables dans des tables dans une mémoire de données (SD) également connectée à l'ordinateur (C), une mémoire (SA) pour un algorithme de contour, une mémoire de résultat (SR) et le cas échéant une unité graphique (G) étant en outre connectées à l'ordinateur (C) et des données géométriques qui sont liées entre elles par une relation géométrique logique étant combinées entre elles par l'ordinateur (C) conformément à l'algorithme de contour mémorisé, caractérisé par le fait que, par combinaison selon des règles pré-établies avec d'autres jeux de données de commande numérique ou à l'intérieur d'un même jeu de données de commande numérique, l'ordinateur (C) transforme un lot de données géométriques d'un jeu de données de commande numérique en un autre lot de données géométriques aux fins d'obtenir des informations sur les coordonnées des points d'extrémité d'une droite ou sur les coordonnées du centre d'une courbe appartenant au contour concerné de la pièce et par le fait que pour réaliser la combinaison, on lit la liste de la fin jusqu'au début en commençant par le dernier jeu de données rentré, puis dans le sens inverse et on répète cette lecture alternée jusqu'à ce que la combinaison des données géométriques ne fasse plus apparaître de données géométriques nouvelles et par le fait que les jeux de données complétés de la sorte sont introduits dans la mémoire de résultat (SR) et éventuellement affichés en tant que contour de la pièce sur une unité d'affichage (CRT) au moyen d'une unité graphique (G).

2. Dispositif selon la revendication 1, caractérisé par le fait qu'une mémoire additionnelle (SB) d'algorithme de "back-track" est connectée à l'ordinateur.

3. Dispositif selon la revendication 1, caractérisé par le fait que l'unité graphique (G) se compose d'une mémoire graphique (GS) et d'un processeur graphique (GP) qui pilote une unité d'affichage (CRT).

4. Dispositif selon la revendication 1, caractérisé par le fait que la mémoire de résultat (SR) est connectée à une machine à commande numérique (NC).

5. Dispositif selon les revendications 1 et 3, caractérisé par le fait que l'on peut agir manuellement sur l'unité graphique (G) par l'intermédiaire du système d'entrée de données (E).
